# EUROPÄISCHE PATENTSCHRIFT

(11) **EP 1 669 935 B1**
(45) Veröffentlichungstag und Bekanntmachung des Hinweises auf die Patenterteilung: **05.10.2011**
(21) Anmeldenummer: 05026316.9
(22) Anmeldetag: 02.12.2005
(51) Int. Cl.: G07B 15/02, G07F 7/08, G06Q 20/00

(54) **Verfahren zur automatischen Erfassung der Benutzung eines Transportmittels zur Personenbeförderung**
Method for automatically recording the use of fee-based vehicles and for deducting the fees
Méthode automatique de détecter l'utilisation des vehicules payants et de facturer le prix du voyage

(30) Priorität: 16.12.2004 DE 102004061180; 02.12.2004 DE 102004058273; 02.12.2004 EP 04028569
(43) Veröffentlichungstag der Anmeldung: 14.06.2006
(73) Patentinhaber: mcity GmbH, 41239 Mönchengladbach (DE)
(72) Erfinder: Stoffelsma, Bouke C., 41239 Mönchengladbach (DE); Feiter, Manfred, 41238 Mönchengladbach (DE)
(74) Vertreter: Stenger, Watzke & Ring

(56) Entgegenhaltungen:
- EP-A- 0 465 456
- EP-A- 1 326 201
- WO-A-01/03075
- WO-A-01/69540
- WO-A-02/056237
- WO-A-02/071340
- DE-A1- 10 341 189
- DE-A1- 19 957 660

## Beschreibung

Die vorliegende Erfindung betrifft ein Verfahren zur automatischen Erfassung der Benutzung eines Transportmittels zur Personenbeförderung.

Bislang wird die Benutzung kostenpflichtiger Transportmittel, insbesondere des öffentlichen Personenverkehrs, überwiegend in Form von auf Papier gedruckten Fahrkarten abgewickelt. Diese Fahrkarten sind jedoch umständlich in der Handhabung und relativ einfach zu fälschen.

Seit mehreren Jahren gibt es im Stand der Technik unterschiedliche Verfahren, bei denen der Fahrschein aus Papier durch ein elektronisches Ticket ersetzt wird. Diese elektronischen Tickets werden bei einer Benutzung eines kostenpflichtigen Transportmittels automatisch erfaßt, woraufhin der Fahrpreis automatisch ermittelt und abgerechnet werden kann.

Aus dem Stand der Technik sind verschiedene Verfahren bekannt, die eine automatische Erfassung und eine bequeme Abrechnung ermöglichen sollen:

Der Rhein-Main-Verkehrsverbund betreibt in Hanau probeweise ein so genanntes "Check-In/Check-Out"-System, bei dem der Fahrgast sich mit Hilfe einer Chipkarte beim Ein- und Aussteigen an einem Terminal im Fahrzeug identifiziert. Ein Hintergrundsystem errechnet dann, welche Strecken der Kunde tatsächlich gefahren ist und bucht die ermittelten Fahrpreise auf ein mit der Chipkarte verknüpftes Konto.

Derartige "Check-In/Check-Out"-Systeme haben angeordnet in Transportmitteln den Nachteil, daß sie für Massenanwendungen in der Regel nicht geeignet sind: Man stelle sich eine volle U-Bahn zur Hauptverkehrszeit vor, bei der jeder Fahrgast beim oder kurz vor dem Erreichen der Ziel-Haltestelle zunächst an einen Terminal in der U-Bahn herantreten muss, um einen Check-Out vorzunehmen. Dies ist faktisch nur bei geschlossenen Systemen mit Drehgittern an jeder Haltestelle realisierbar, wie beispielsweise der U-Bahn in London. Für offene Systeme, wie sie in Deutschland üblich sind, ist dies eher unpraktisch. Für Inhaber von Monatskarten oder dergleichen erweist sich zudem der zusätzliche Aufwand für Check-In und Check-Out als Verschlechterung zum Fahrschein auf Papier.

Aus der PCT-Anmeldung NL01/00215 ist ein Verfahren bekannt, bei dem der Fahrgast ein mobiles Gerät (z.B. ein Mobiltelefon oder ein Transponder) mit einer ihm zugeordneten Nummer benutzt, um automatisch identifiziert zu werden, wenn er sich in einem Fahrzeug des öffentlichen Nahverkehrs aufhält. Das Fahrzeug registriert automatisch, wo der Fahrgast das Fahrzeug betritt, und wo er das Fahrzeug wieder verläßt. In der Regel werden diese Daten an ein Hintergrundsystem übermittelt, das auf Basis dieser Daten den Fahrpreis für die zurückgelegte Strecke ermittelt. Solche Systeme werden oft als "Be-In/Be-Out"-Systeme bezeichnet.

Aus der DE 199 57 660 ist ein weiteres Verfahren zur Abrechnung des Fahrpreises bei der Benutzung öffentlicher Verkehrsmittel bekannt, bei dem es sich ebenfalls um ein "Be-In/Be-Out"-System handelt. Bei diesem Verfahren ist ein vom Benutzer mitgeführter scheckkartenähniicher Speicher mit einem Guthaben belegt. Während der Nutzung öffentlicher Verkehrsmittel werden von dem Verkehrsmittel Zählimpulse ausgesandt und bei jedem empfangenen Zählimpuls von dem auf der Speichereinheit abgespeicherten Guthaben ein vorbestimmter Betrag abgebucht. Nachteilig ist, daß die Tarife für die Benutzung von Transportmitteln nicht ausreichend flexibel gestaltet werden können.

Aus der Schweiz ist ein Pilotprojekt "easyride" bekannt, bei dem der Kunde eine Transponder-Karte bei sich führt, die beim Benutzen eines Fahrzeugs eine Anmeldung im Fahrzeug vornimmt und dies regelmäßig wiederholt. Die Erkennung der Transponder-Karte erfolgt dabei über an den Türen des Fahrzeugs angeordnete Antennen, die die Transponder-Karte aktivieren und gleichzeitig eine Fahrzeugkennung an diese senden. Über einen weiteren Funksender wird die Registrierung der Transponder-Karte im Fahrzeug vorgenommen. Problematisch ist bei diesem Verfahren der kosten- und fehleranfällige Installationsaufwand der Antennen und des Senders am Fahrzeug. Ferner kann keine ordnungsgemäße Funktion des Verfahrens beim Ausfall einer Antenne gewährleistet werden.

Die zuvor beschriebenen "Be-In/Be-Out"-Systeme weisen den Nachteil auf, das sie sehr teuer und bislang technisch anfällig sind. Ein weiterer Nachteil besteht darin, daß bei den genannten "Be-In/Be-Out"-Systemen nicht genau erfaßt werden kann, ob sich ein Kunde mit dem entsprechenden elektronischen Ticket innerhalb eines stehenden Transportmittels befindet oder ob er außerhalb des Transportmittels unmittelbar neben diesem steht. Somit ist es nicht auszuschließen, daß Nutzerendgeräte, die von sich nahe von Transportmitteln aufhaltenden Passanten mitgeführt werden, die diese aber nicht benutzen, Signale von den innerhalb der Transportmittel angeordneten Sendern empfangen. Um auszuschließen, daß in solchen Fällen Fahrpreise für Fahrten abgerechnet werden, die gar nicht in Anspruch genommen wurden, müssen die erfaßten Streckendaten im Nachhinein überprüft werden. Dies ist sehr umständlich und teuer.

Es ist eine Aufgabe der vorliegenden Erfindung, ein altematives und verbessertes Verfahren zur automatischen Erfassung der Benutzung eines kostenpflichtigen Transportmittels zur Personenbeförderung zu schaffen.

Diese Aufgabe wird gemäß der vorliegenden Erfindung durch ein Verfahren nach Anspruch 1 gelöst. Die abhängigen Ansprüche beziehen sich auf individuelle Ausgestaltungen der vorliegenden Erfindung.

Bei dem erfindungsgemäßen Verfahren sendet ein Sender Signale aus, die von einem Empfänger empfangen werden. Ferner werden Positions- und/oder Bewegungsinformationen des Transportmittels ermittelt, anhand derer eine zurückgelegte Fahrtstrecke oder die Geschwindigkeit des Transportmittels feststellbar ist. Zur Erfassung der Benutzung des Transportmittels werden die Intensitätsänderungen aufeinanderfolgender, vom Empfänger empfangener Signale sowie die ermittelten Positions- und/oder Bewegungssignale ausgewertet, was nachfolgend anhand zweier Alternativen des erfindungsgemäßen Verfahrens noch näher erläutert wird.

Bei einer ersten Alternative des erfindungsgemäßen Verfahrens zur automatischen Erfassung eines kostenpflichtigen Transportmittels zur Personenbeförderung sendet ein im Bereich des Transportmittels angeordneter Sender Signale aus, die zumindest eine Transportmittelkennung und eine Bewegung des Transportmittels anzeigende Bewegungs- und/oder Positionsinformationen enthalten, die zuvor mit geeigneten Mitteln erfaßt wurden. Von dem Sender ausgesendete Signale, die von einem in ein Nutzerendgerät eines Nutzers integrierten Empfänger empfangen werden, werden im Nutzerendgerät basierend auf den Bewegungsinformation und der Intensitätsänderung aufeinanderfolgender Signale ausgewertet, um festzustellen, ob sich das Nutzerendgerät im Transportmittel befindet oder nicht.

Die Kommunikation zwischen dem Sender und dem Empfänger kann ausschließlich unidirektional erfolgen. Das bedeutet, daß der Sender ausschließlich Signale an sich in Sendereichweite des Senders befindende Nutzerendgeräte sendet, diese Nutzerendgeräte jedoch nicht auf die empfangenen Signale des Senders antworten. Durch eine solche ausschließlich unidirektionale Kommunikation, die auch als Broadcast-Verfahren bezeichnet wird, werden Kollisionen vermieden, die auftreten können, wenn mehrere Nutzerendgeräte gleichzeitig Daten versenden. In diesem Fall müßten nämlich größere Frequenzbereiche reserviert werden, damit eine große Anzahl Nutzerendgeräte störungsfrei senden kann. Insbesondere an großen Verkehrsknotenpunkten ist dies nicht zu realisieren. Eine weitere Alternative wäre, ein Protokoll zu verwenden, mit dem die Aufsendungen der Nutzerendgeräte koordiniert werden. Eine solche Implementierung ist jedoch aufwendig und äußerst fehleranfällig. Ferner benötigt der im Bereich des Transportmittels angeordnete Sender eine Kommunikationsverbindung zu einer zentralen Rechnereinheit zur Weiterleitung der empfangenen Daten, was ebenfalls mit Aufwand und Kosten verbunden ist.

Wie bereits vorher erwähnt, werden die vom Sender ausgesendeten Signale, die von einem Nutzerendgerät empfangen werden, gemäß der ersten Alternative des erfindungsgemäßen Verfahrens basierend auf den Positions- und/oder Bewegungsinformationen und der Intensitätsänderung aufeinanderfolgender Signale, also zeitlich versetzt empfangener Signale, ausgewertet, um festzustellen, ob sich das Nutzerendgerät im Transportmittel befindet oder nicht. Dies erfolgt folgendermaßen:

Zeigen die Positions- und/oder Bewegungsinformationen und Intensitäten aufeinanderfolgender Signale an, daß sich das Transportmittel bewegt oder daß das Transportmittel eine bestimmte Wegstrecke zurückgelegt hat und die Intensität aufeinanderfolgender Signale im wesentlichen gleich bleibt, so wird darauf geschlossen, das sich das Nutzerendgerät innerhalb eines Transportmittels befindet, so daß entsprechend ein Fahrpreis ermittelt und abgerechnet werden kann.

Wird festgestellt, daß sich das Transportmittel bewegt, während die Intensität aufeinanderfolgender Signale deutlich zu- oder abnimmt, so wird darauf geschlossen, daß sich das Nutzerendgerät außerhalb des Transportmittels befindet, wobei sich das Transportmittel gerade auf das Nutzerendgerät zu oder von diesem weg bewegt. Entsprechend darf keine Ermittlung und Abrechnung eines Fahrpreises stattfinden.

Ergibt die Auswertung, daß das Transportmittel stillsteht und die Intensität aufeinanderfolgender Signale konstant ist, so kann dies bedeuten, daß sich das Nutzerendgerät innerhalb eines stehenden Transportmittels oder außerhalb eines stehenden Transportmittels befindet, wobei sich das Nutzerendgerät selbst ebenfalls nicht bewegt. In diesem Fall setzt die Ermittlung und Abrechnung des Fahrpreises ebenfalls noch nicht ein, da hier nicht sichergestellt ist, daß sich das Nutzerendgerät tatsächlich innerhalb des Transportmittels befindet.

Schließlich kann bei der Auswertung festgestellt werden, daß sich das Transportmittel nicht bewegt, die Intensität aufeinanderfolgender Signale jedoch deutlich abnimmt. Dies zeigt an, daß sich das Nutzerendgerät von dem stehenden Transportmittel weg bewegt, sich das Nutzerendgerät also außerhalb des Transportmittels befindet. Auch hier darf kein Fahrpreis ermittelt und abgerechnet werden.

Durch diese Auswertung der von dem Sender an den Empfänger des Nutzerendgeräts übermittelten Bewegungsinformationen und der intensitätsänderungen aufeinanderfolgender Signale wird ausgeschlossen, daß einem Nutzerendgerät, das sich nicht innerhalb eines Transportmittels befindet, Fahrpreise berechnet werden.

Vorzugsweise ist die Sendereichweite des Senders derart begrenzt, daß die vom Sender ausgesendeten Signale im wesentlichen nur von Nutzerendgeräten empfangen werden können, die sich innerhalb des Transportmittels befinden. Auf diese Weise soll erreicht werden, daß Nutzerendgeräte, die sich außerhalb des Transportmittels und weiter entfernt von diesem befinden, beispielsweise einige Meter entfernt, keine Signale vom Sender empfangen. Die Anzahl von Nutzerendgeräten, die ungewollt von den Sendern adressiert werden, wird entsprechend reduziert.

Der Sender sendet bevorzugt Signale in regelmäßigen Zeitabständen aus, die beispielsweise wenige Sekunden betragen. Durch die endgerätseitige Auswertung einer Vielzahl von empfangenen Signalen wird die Verläßlichkeit der ersten Alternative des erfindungsgemäßen Verfahrens gesteigert.

Vorteilhaft ist im Bereich des Transportmittels eine Empfangs- und Überprüfungseinrichtung angeordnet, die die vom Sender ausgesendeten Signale empfängt und die Funktion des Senders anhand der empfangenen Signale überprüft. Da die Empfangs- und Überprüfungseinrichtung und der Sender einen definierten Abstand voneinander aufweisen, ist davon auszugehen, daß die von der Empfangs- und Überwachungseinrichtung empfangenen Signale des Senders eine konstante Intensität aufweisen. Ist dies nicht der Fall, so liegt offensichtlich ein Fehler vor, woraufhin der erste Sender beispielsweise automatisch die Frequenz wechselt, auf der er sendet. Alternativ kann auch ein Ersatzsender vorgesehen sein, der die Aufgabe des Senders übemimmt, sobald die Empfangs- und Überprüfungseinrichtung eine Funktionsstörung des Senders detektiert.

Gemäß einer Weiterbildung der vorliegenden Erfindung ist zusätzlich zu dem Sender, der innerhalb des Transportmittels angeordnet ist, ein Vergleichssender außerhalb am Transportmittel vorgesehen, wobei der Vergleichssender Vergleichssignale aussendet, die ebenfalls von Nutzerendgeräten, die sich innerhalb der Sendereichweite befinden, empfangen werden. Der Sender und der Vergleichssender senden bevorzugt Signale gleicher Intensität. Ergibt die Auswertung durch das Nutzerendgerät, daß die Intensität des vom Sender empfangenen Signals stärker als die des vom Vergleichssender empfangenen Signals ist, so wird darauf geschlossen, daß sich das Nutzerendgerät innerhalb des Transportmittels befindet. Ist hingegen die Intensität des vom Vergleichssender gesendeten Signals (über eine vorbestimmte Zeitdauer) stärker als die des vom Senders gesendeten Signals, so ist darauf zu schließen, daß sich das Nutzerendgerät außerhalb des Transportmittels befindet. Auf diese Weise kann beispielsweise ermittelt werden, ob sich eine ein Nutzerendgerät mitführende Person unmittelbar neben einem Transportmittel befindet oder in einem Fahrzeug neben dem Transportmittel herfährt. Entsprechend kann auch in solchen Fällen sichergestellt werden, daß die Benutzung eines kostenpflichtigen Transportmittels ordnungsgemäß erfaßt wird. Alternativ können der Sender und der Vergleichssender auch Signale mit einer vorbestimmten Intensitätsdifferenz aussenden. Entsprechend kann festgestellt werden, welche Intensität abgeschwächt wurde und welche nicht.

Die Sender senden bevorzugt auf einer schmalen Bandbreite, so daß eine Unterscheidung von Signalen, die von anderen Sendern ausgesendet werden, besser vorgenommen werden kann, wodurch weniger Störungen auftreten.

Für den Fall, daß das Nutzerendgerät Signale von mehreren Sendern und/oder Vergleichssendern empfängt, die im Bereich verschiedener Transportmittel angeordnet sind, was beispielsweise der Fall sein kann, wenn zwei Transportmittel unmittelbar nebeneinander stehen oder nebeneinander herfahren, wird die Anzahl der empfangenen Signale unter Verwendung von Ausschlußkriterien derart reduziert, daß maximal ein Signal und/oder ein Vergleichssignal verbleibt. Ein Ausschlußkriterium kann beispielsweise sein, daß eine oder keine Intensitätsänderung bestimmter Signale und/oder daß eine oder keine Bewegungs- oder Positionsänderung des Transportmittels erfaßt wird/werden, wie es zuvor bereits beschrieben wurde.

Bevorzugt sendet einer der Sender ferner Basissignale aus, die Nutzerendgeräte, welche die Basissignale empfangen, automatisch aktivieren. Entsprechend kann sichergestellt werden, das sämtliche Nutzerendgeräte, die sich innerhalb eines Transportmittels befinden, eingeschaltet sind. Die Basissignale werden dabei bevorzugt mit einer größeren Sendereichweite als die anderen Signale ausgesendet, um sicherzustellen, daß jedes Nutzerendgerät aktiviert ist, das sich innerhalb des Transportmittels befindet.

Gemäß einer Alternative des erfindungsgemäßen Verfahrens zur automatischen Erfassung der Benutzung eines Transportmittels ist der Sender in ein Nutzerendgerät integriert und der Empfänger im Transportmittel angeordnet. Das vom Sender ausgesendete Signal umfaßt eine das Nutzerendgerät oder den Nutzer eindeutig identifizierende Kennung, die bei der Auswertung herangezogen wird, um festzustellen, welches Nutzerendgerät sich im Transportmittel befindet. Die Auswertung findet dabei in einer separaten Auswertungseinheit statt, die ebenfalls im Transportmittel vorgesehen sein kann. Wird das Vorhandensein eines Nutzerendgerätes in einem Transportmittel anhand der Auswertungseinheit detektiert, so wird der Fahrpreis ermittelt und abgerechnet. Zu Abrechnungszwecken kann jeder Kennung ein beim Verfahrensanbieter eingerichtetes Guthaben- oder Abrechnungskonto zugeordnet sein, über das die ermittelten Fahrpreise abgerechnet werden können.

Ähnlich wie bei der ersten Alternative ist die Sendereichweite des Senders derart begrenzt, daß der Empfänger die vom Sender ausgesendeten Signale im wesentlichen nur dann empfängt, wenn sich der Sender innerhalb des Transportmittels befindet, um auf diese Weise die Anzahl der Signale, die von sich außerhalb des Transportmittels befindenden Sendern ausgesendet werden, möglichst auf Null zu reduzieren.

Der Sender sendet vorteilhaft Signale in regelmäßigen Zeitabständen aus, wobei die Zeitabstände bevorzugt wenige Sekunden betragen.

Bevorzugt ist der Empfänger innerhalb des Transportmittels und ein Vergleichsempfänger außerhalb am Transportmittel angeordnet. Befindet sich der im Nutzerendgerät integrierte Sender also innerhalb des Transportmittels, so ist das Signal, das vom Vergleichsempfänger empfangen wird, schwächer als das Signal, das von dem innerhalb des Transportmittels angeordneten Empfänger empfangen wird. Befindet sich der Sender hingegen außerhalb des Transportmittels, so ist die Intensität des vom Vergleichsempfänger empfangenen Signals stärker als die des vom Empfänger empfangenen Signals. Entsprechend können Rückschlüsse darauf gezogen werden, ob sich das Nutzerendgerät und damit die dieses bei sich tragende Person innerhalb oder außerhalb des Transportmittels befindet.

Auch bei der zweiten Alternative ist im Bereich des Transportmittels vorteilhaft ein Sender angeordnet, der Basissignale aussendet, die Nutzerendgeräte, welche Basissignale empfangen, automatisch aktivieren.

Nachfolgend werden Alternativen des erfindungsgemäßen Verfahrens unter Bezugnahme auf die Zeichnung genauer beschrieben. Darin ist

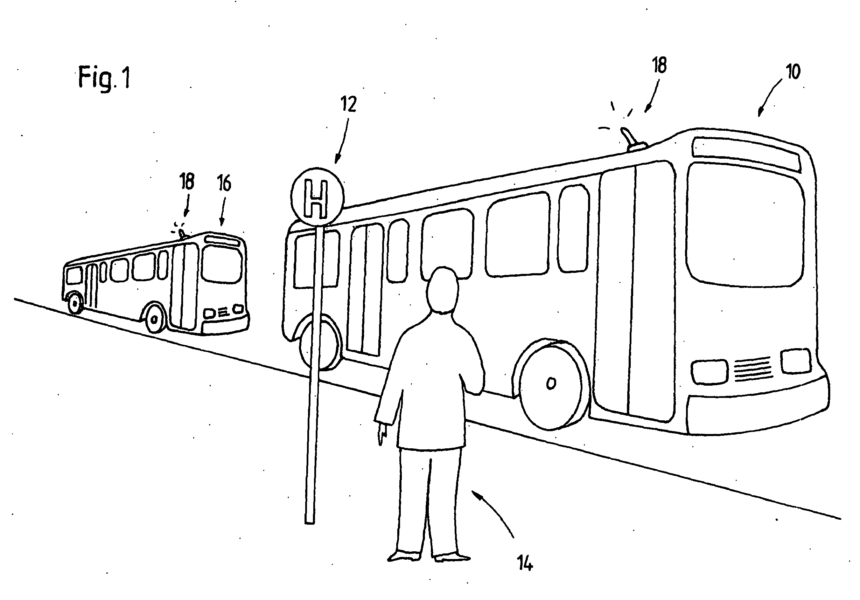

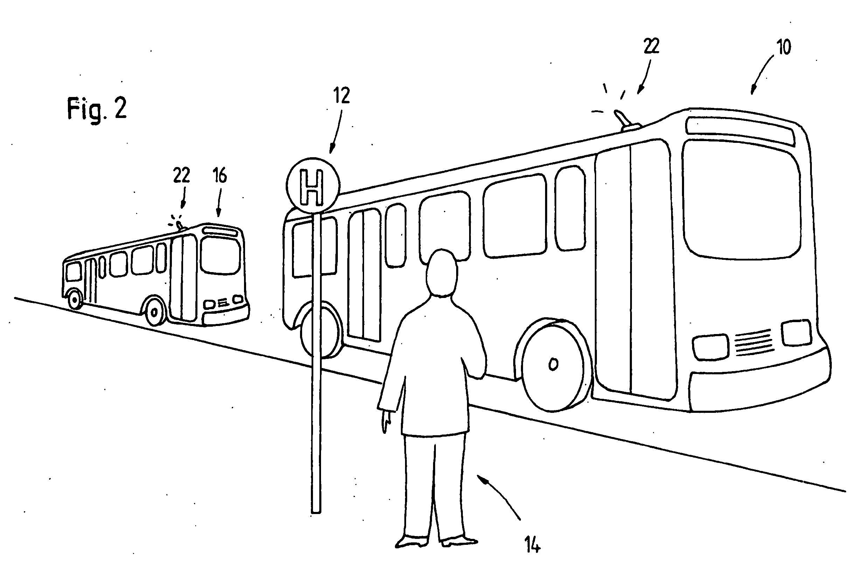

Fig. 1 eine perspektivische Ansicht, anhand der eine erste Alternative des erfindungsgemäßen Verfahrens beschrieben wird, und Fig. 2 eine perspektivische Ansicht, anhand der eine zweite Alternative des erfindungsgemäßen Verfahrens beschrieben wird.

Gleiche Bezugsziffern beziehen sich nachfolgend auf gleichartige Objekte oder Personen.

Fig. 1 zeigt eine perspektivische Ansicht eines Busses 10, der an einer Haltestelle steht, die mit einem Haltestellenzeichen 12 markiert ist. An der Haltestelle wartet eine Person 14, die ein nicht dargestelltes Nutzerendgerät bei sich trägt, das zur Durchführung des erfindungsgemäßen Verfahrens geeignet ist. Die Zeichnung zeigt einen weiteren Bus 16, der sich aus einiger Entfernung der Haltestelle nähert.

Im Innenraum jedes Busses 10 und 16 ist ein nicht dargestellter Sender angeordnet, der Signale aussendet, die zumindest eine Transportmittelkennung zur Identifizierung des jeweiligen Busses 10, 16 und eine Bewegung des jeweiligem Busses 10, 16 anzeigende Bewegungsinformationen enthalten. Die Sendereichweite dieser Sender ist derart begrenzt, daß die vom Sender ausgesendeten Signale im wesentlichen nur von Nutzerendgeräten empfangen werden können, die sich innerhalb des Transportmittels befinden. Aus technischen Gründen ist es meist jedoch nicht auszuschließen, daß auch Nutzerendgeräte von Personen, die sich außerhalb eines der Busse 10 oder 16 ganz in dessen Nähe aufhalten, Signale von dem entsprechenden Sender empfangen. Die Sender senden ihre Signale in regelmäßigen Zeitintervallen aus, beispielsweise alle fünf Sekunden.

Innerhalb jedes Busses 10, 16 ist ferner eine nicht dargestellte Empfangs- und Überprüfungseinrichtung angeordnet, die die von dem entsprechenden Sender ausgesendeten Signale empfängt und die Funktion des Senders anhand der empfangenen Signale überprüft. Da sowohl die Empfangs- und Überprüfungseinrichtung als auch der Sender innerhalb des Fahrzeugs und somit ortsfest angeordnet sind, ist aufgrund des gleichbleibenden Abstands zwischen Empfangs- und Überprüfungseinrichtung und dem Sender davon auszugehen, daß die Intensität der vom Sender ausgesendeten Signale, die von der Empfangs- und Überprüfungseinrichtung empfangen werden, über die Zeit konstant bleibt. Stellt die Empfangs- und Überprüfungseinrichtung bei ihrer Überprüfung der empfangenen Signale fest, daß die Intensität der empfangenen Signale variiert, so wird darauf geschlossen, daß der Sender defekt ist. In diesem Fall wird der Sender von der Empfangs- und Überprüfungseinrichtung dazu veranlaßt, die Frequenz oder den Kanal, auf der oder dem er sendet, zu wechseln. Gleichzeitig wechselt auch die Empfangs- und Überprüfungseinrichtung auf die entsprechende Frequenz oder auf den entsprechenden Kanal, so daß sie weiterhin die Signale von dem Sender empfangen kann. Auf diese Weise können Fehler, die auf einer Frequenz- oder Kanalstörung beruhen, ausgeschlossen werden. Haben auch ein oder mehrere Frequenz- oder Kanalwechsel nicht den gewünschten Erfolg, so wird der Sender aus dem Betrieb genommen und durch einen nicht dargestellten Ersatzsender, der ebenfalls im Innenraum der Busse 10 und 16 angeordnet ist, ersetzt, der dann die Funktion des Senders übernimmt. Entsprechend können Fehler aufgrund einer Funktionsstörung des Senders ausgeschlossen werden.

Neben dem Sender umfaßt jeder Bus 10, 16 einen Vergleichssender 18, der im vorliegenden Fall auf dem Dach der jeweiligen Busse 10 und 16 und somit außerhalb der Busse angeordnet ist. Dieser Vergleichssender 18 sendet Vergleichssignale, die bevorzugt mit gleicher Intensität wie die Signale des Senders ausgesendet werden. Hält sich eine Person im Innenraum eines der Busse 10 oder 16 auf, so ist die Intensität der Signale, die vom Sender ausgesendet und von einem Nutzerendgerät, das von der Person mitgeführt wird, empfangen werden, stärker als die Intensität der Vergleichssignale, die das Nutzerendgerät vom Vergleichssender 18 empfängt, da der Vergleichssender 18 außerhalb und der Sender innerhalb eines jeden Busses 10, 16 vorgesehen ist. Wenn also die vom Sender empfangen Signale stärker als die vom Vergleichssender 18 empfangenen Vergleichssignale sind, so schließt das Nutzerendgerät darauf, das sich die Person innerhalb des Busses befindet. Sind hingegen die vom Nutzerendgerät empfangenen Vergleichssignale des Vergleichssenders 18 stärker als die des Senders, so befindet sich die Person außerhalb des Busses.

Auch die Vergleichssender 18 sind mit der innerhalb eines jeden Busses 10, 16 angeordneten Empfangs- und Überprüfungseinrichtung wirkverbunden, so daß auch die Funktion der Vergleichssender 18 von der Empfangs- und Überprüfungseinrichtung überwacht wird.

Schließlich senden die Vergleichssender 18 Basissignale aus, die Nutzerendgeräte, welche die Basissignale empfangen, automatisch aktivieren, um sicherzustellen, daß das Nutzerendgerät jeder Person, die einen Bus 10, 16 betritt, eingeschaltet ist.

Nachfolgend wird eine Ausführungsform gemäß der ersten Alternative des erfindungsgemäßen Verfahrens genauer beschrieben:
Das Nutzerendgerät der an der Haltestelle wartenden Person 14 empfängt Basissignale des Vergleichssenders 18 sowohl des an der Haltestelle stehenden Busses 10 als auch des Vergleichssenders 18 des herannahenden Busses 16, wodurch es automatisch aktiviert wird.

Da die Person 14 in unmittelbarer Nähe des Busses 10 steht, empfängt das Nutzerendgerät ferner Signale von dem im Innenraum des Busses 10 angeordneten Sender sowie von dem auf dem Dach des Busses 10 angeordneten Vergleichssender 18. Anhand der von dem Sender empfangenen Bewegungsinformationen stellt das Nutzerendgerät fest, daß der Bus 10 derzeit steht. Die erforderlichen Bewegungsdaten des Busses 10 können beispielsweise anhand von Tachoinformationen, Drehgeberinformationen oder dergleichen an den Sender übermittelt werden. Neben der Auswertung der vom Sender empfangenen Bewegungsinformationen werden die Intensitäten der vom Sender und vom Vergleichssender empfangenen Signale miteinander verglichen. Da die Signalübertragung vom Vergleichssender 18 zum Nutzerendgerät im Gegensatz zu der des Senders nicht durch die Karosserie des Busses beeinträchtigt wird, ist die Intensität der vom Nutzerendgerät empfangenen Vergleichssignale des Vergleichssenders 18 stärker als die der vom Sender übermittelten Signale, woraus geschlossen wird, daß sich die Person 14 derzeit noch außerhalb des Busses 10 befindet.

Es besteht die Möglichkeit, daß das Nutzerendgerät der Person 14 auch Signale von dem Vergleichssender 18 des herannahenden Busses 16 empfängt. Da die Intensität der vom Vergleichssender 18 des Busses 16 empfangenen Signale jedoch wesentlich schwächer als die des Senders und des Vergleichssenders 18 des Busses 10 ist, werden die vom Vergleichssender 18 des Busses 16 ausgesendeten Signale vom Nutzerendgerät ignoriert. Die schwache Intensität der vom Vergleichssender 18 des Busses 16 ausgesendeten Signale dient vorliegend also als Ausschlußkriterium.

Steigt die Person 14 dann in den Bus 10 ein, so wird nunmehr die Signalübertragung des Vergleichssenders 18 des Busses 10 durch die Karosserie des Busses 10 behindert, während der im Innenraum des Busses 10 angeordnete Sender unbeeinträchtigt senden kann. Entsprechend ist die Intensität der vom Nutzerendgerät der Person 14 empfangenen Signale des Senders stärker als die der empfangenen Signale des Vergleichssenders 18. Daraus kann das Nutzerendgerät schließen, daß sich die Person 14 nunmehr innerhalb des Busses 10 befindet.

Fährt der Bus 10 dann an, so ergibt die Auswertung der vom Sender empfangenen Bewegungsinformationen, daß sich der Bus 10 in Bewegung gesetzt hat. Nunmehr wird überprüft, ob die Intensität der vom Sender empfangenen Signale im wesentlichen gleichbleibend ist. Ist dies der Fall, so kann davon ausgegangen werden, daß sich die Person 14 weiterhin im Bus 10 befindet. Entsprechend kann nun die Ermittlung des Fahrpreises beginnen. Die Fahrpreisermittlung und Berechnung kann basierend auf einem der eingangs beschrieben "Be-In/Be-Out"-Systeme oder auf eine alternative Art und Weise erfolgen. Bevorzugt wird zur Ermittlung und Abrechnung des Fahrpreises ein "Broadcast"-Verfahren verwendet, das auf einer unidirektionalen Kommunikation beruht. Da die Ermittlung und Berechnung des Fahrpreises jedoch nicht unmittelbar Gegenstand der vorliegenden Erfindung ist, wird diese nachfolgend nicht näher erläutert.

Verläßt die Person 14 den Bus 10, so sind zunächst die vom Nutzerendgerät empfangenen Signale des Vergleichssenders 18 wieder stärker als die vom Sender übertragenen Signale. Hieraus schließt das Nutzerendgerät, daß die Person 14 nicht länger im Bus 10 verweilt. Entfernt sich der Bus 10 dann von der Person 14 und entsprechend vom Nutzerendgerät, so empfängt das Nutzerendgerät Bewegungsinformationen bei schwächer werdender Signalintensität. Nunmehr ist sichergestellt, daß die Person 14 tatsächlich den Bus verlassen hat.

Die vorliegende Erfindung hat den wesentlichen Vorteil, daß wirklich nur dann ein Fahrpreis ermittelt und abgerechnet wird, wenn die Person 14 tatsächlich im Bus 10 befördert wurde.

Es sei darauf hingewiesen, daß grundsätzlich auf den zweiten Sender 18 verzichtet werden kann. Allein durch die Auswertung der vom Sender ausgesendeten Bewegungsinformationen und der Änderung der Intensität der vom Nutzerendgerät empfangenen Signale, die vom Sender übermittelt werden, ist bereits erkennbar, ob sich die Person 14 im oder außerhalb des Busses 10 befindet. Ein sich bewegender Bus 10 bei konstanter Intensität der empfangenen Signale ist normalerweise ein ausreichendes Zeichen dafür, daß sich die Person 14 innerhalb des Busses 10 befindet. Soll allerdings ausgeschlossen werden, daß ein Nutzerendgerät einer Person, die in einem weiteren Fahrzeug parallel neben dem Bus herfährt, Signale gleichbleibender Intensität eines fahrenden Busses 10 empfängt, woraufhin gegebenenfalls eine ungerechtfertigte Ermittlung und Abrechnung eines Fahrpreises erfolgen würde, so sind Vergleichssignale erforderlich, weshalb im Ausführungsbeispiel der Vergleichssender 18 angeordnet ist.

Unter Bezugnahme auf Figur 2 wird nachfolgend eine zweite Alternative des erfindungsgemäßen Verfahrens zur automatischen Erfassung einer Benutzung eines Transportmittels zur Personenbeförderung beschrieben. Figur 2 zeigt, ähnlich wie Figur 1, eine perspektivische Ansicht eines Busses 10, der an einer Haltestelle steht, die mit einem Haltestellenzeichen 12 markiert ist. An der Haltestelle wartet eine Person 14, die ein nicht dargestelltes Nutzerendgerät bei sich trägt, das zur Durchführung des erfindungsgemäßen Verfahrens geeignet ist. In das Nutzerendgerät ist ein Sender integriert, mit dem Signale ausgesendet werden können, die zumindest eine das Nutzerendgerät oder den Nutzer eindeutig identifizierende Kennung, wie beispielsweise einen Code oder dergleichen aufweisen. Die Zeichnung zeigt einen weiteren Bus 16, der sich aus einiger Entfernung der Haltestelle nähert. Im Innenraum der Busse 10 und 16 ist jeweils ein nicht dargestellter Empfänger angeordnet, der derart eingerichtet ist, daß er von Nutzerendgeräten ausgesendete Signale empfangen kann. Ferner umfaßt jeder der Busse 10 und 16 eine Auswertungseinheit, mit der die von dem Empfänger empfangenen Signale, die von Nutzerendgeräten ausgesendet werden, zusammen mit Positions- und/oder Bewegungsinformationen der Transportmittel, in geeigneter Weise ausgewertet werden können, was nachfolgend noch näher beschrieben ist.

Neben dem Empfänger umfaßt jeder der Busse 10 und 16 zudem einen Vergleichsempfänger 22, der im vorliegenden Fall auf dem Dach der jeweiligen Busse 10 und 16 und außerhalb der Busse angeordnet ist.

Da die Person 14 in unmittelbarer Nähe des Busses 10 steht, empfangen sowohl der innerhalb des Busses 10 angeordnete Empfänger als auch der auf dem Dach des Busses 10 angeordnete Vergleichsempfänger 22 die vom Sender ausgesendeten Signale, wobei die empfangenen Signale an die Auswertungseinheit übermittelt werden. Ferner werden die Positions- und Bewegungsinformationen, die in geeigneter Weise erfaßt werden, an die Auswertungseinheit übermittelt. Daraufhin erfolgt in der Auswertungseinheit eine Auswertung basierend auf den empfangenen Signalen und den Positions- und Bewegungsinformationen des Busses 10. Anhand der Positions- und Bewegungsinformationen stellt die Auswertungseinheit fest, daß der Bus 10 derzeit steht. Ferner wird festgestellt, daß die Intensität der von dem Vergleichsempfänger 22 empfangenen Signale stärker als die Intensität der von dem innerhalb des Busses 10 angeordneten Empfänger empfangenen Signale ist, da die Übertragung der Signale vom Sender des Nutzerendgeräts an den innerhalb des Busses 10 angeordneten Empfänger im Gegensatz zur Signalübertragung vom Sender des Nutzerendgeräts an den Vergleichsempfänger 22 durch die Karosserie des Busses 10 gestört wird. Daraus läßt sich schließen, daß sich die Person 14 derzeit noch außerhalb des Busses 10 aufhält.

Betritt nun die Person 14 den Bus 10, so wird die Übertragung zwischen dem Sender des Nutzerendgeräts und dem Vergleichsempfänger 22 durch die Karosserie des Busses 10 gestört, während die Signalübertragung vom Sender zum innerhalb des Busses angeordneten Empfänger ungestört erfolgt. Die Intensität der von dem innerhalb des Busses 10 angeordneten Empfänger empfangenen Signale ist entsprechend stärker als die Intensität derjenigen Signale, die vom Vergleichsempfänger 22 empfangen werden. Entsprechend kann darauf geschlossen werden, daß sich die Person 14 nunmehr innerhalb des Busses 10 befindet.

Setzt sich daraufhin der Bus 10 in Bewegungen, so erfaßt die Auswertungseinheit anhand der Positions- und Bewegungssignale, daß der Bus angefahren ist. Bleibt nunmehr die Intensität sowohl der vom innerhalb des Busses 10 angeordneten Empfänger empfangenen Signale als auch der vom Vergleichsempfänger empfangenen Signale konstant, so ist sichergestellt, daß die Person 14 das Transportmittel benutzt, so daß eine entsprechende Ermittlung und Abrechnung des Fahrpreises erfolgen kann. Nimmt die Intensität der vom Empfänger und Vergleichsempfänger 22 empfangenen Signale hingegen bei fahrendem Bus ab, so kann mit Sicherheit darauf geschlossen werden, daß sich die Person 14 nicht innerhalb des Busses 10 befindet, so daß entsprechend keine Ermittlung und Abrechnung des Fahrpreises erfolgt.

Der Unterschied zwischen der unter Bezugnahme auf Figur 1 beschriebenen Alternative und der unter Bezugnahme auf Figur 2 beschriebenen Alternative des erfindungsgemäßen Verfahrens besteht im wesentlichen darin, daß bei der ersten Alternative Signale an das Nutzerendgerät gesendet und auch in diesem zusammen mit den Positions- und Bewegungsinformationen des Transportmittels ausgewertet werden, während bei der zweiten Alternative das Nutzerendgerät Signale an einen am Transportmittel vorgesehenen Empfänger sendet, die dann unter Verwendung einer separaten Auswertungseinheit zusammen mit den Positions- oder Bewegungsinformationen des Transportmittels ausgewertet werden.

Es sollte klar sein, daß das zuvor geschriebene Ausführungsbeispiel des erfindungsgemäßen Verfahrens nicht einschränkend ist. Vielmehr sind Modifikation und Änderungen möglich, ohne den Schutzbereich der vorliegenden Erfindung zu verlassen, der durch die beiliegenden Ansprüche definiert ist.

### Bezugszeichenliste

- 10: Bus
- 12: Haltestellenzeichen
- 14: Person
- 16: Bus
- 18: Vergleichssender
- 22: Vergleichsempfänger

## Patentansprüche

1. Verfahren zur automatischen Erfassung der Benutzung eines kostenpflichtigen Transportmittels (10; 16) zur Personenbeförderung, bei dem
- mindestens ein Sender Signale aussendet,
- ein Empfänger vom Sender ausgesendete Signale empfängt,
- Positions- und/oder Bewegungsinformationen des Transportmittels ermittelt werden und
- eine Erfassung der Benutzung des Transportmittels basierend auf einer Auswertung einer Positions- und/oder Bewegungsinformationen erfolgt, **dadurch gekennzeichnet, daß** die Erfassung der Benutzung des Transportmittels weiter basierend auf einer Auswertung einer Intensitätsänderung aufeinanderfolgender, vom Empfänger empfangener Signale erfolgt.

2. Verfahren nach Anspruch 1, bei dem der Sender im Transportmittel angeordnet ist, der Empfänger in ein Nutzerendgerät integriert ist und die Auswertung im Nutzerendgerät erfolgt.

3. Verfahren nach Anspruch 2, bei dem im Bereich des Transportmittels (10; 16) eine Empfangs- und Überprüfungseinrichtung angeordnet ist, die die vom Sender ausgesendeten Signale empfängt und die Funktion des Senders anhand der empfangenen Signale überprüft.

4. Verfahren nach Anspruch 3, bei dem der Sender bei beeinträchtigter Funktion automatisch die Frequenz wechselt, auf der er sendet.

5. Verfahren nach einem der Ansprüche 2 bis 4, bei dem der Sender innerhalb des Transportmittels (10; 16) und ein Vergleichssender (18) außerhalb am Transportmittel (10; 16) angeordnet ist, wobei der Vergleichssender Vergleichssignale aussendet.

6. Verfahren nach Anspruch 5, bei dem der Sender und der Vergleichssender (18) Signale gleicher Intensität oder Signale mit einem vorbestimmten Intensitätsunterschied senden.

7. Verfahren nach einem der Ansprüche 2 bis 6, bei dem das Nutzerendgerät, wenn der Empfänger Signale von mehreren Sendern und/oder Vergleichssendem (18) empfängt, die im Bereich verschiedener Transportmittel (10; 16) angeordnet sind, die Anzahl der empfangenen Signale unter Verwendung von Ausschlußkriterien derart reduziert, daß maximal ein Signal und/oder ein Vergleichssignal verbleiben.

8. Verfahren nach Anspruch 1, bei dem der Sender in ein Nutzerendgerät integriert ist, der Empfänger im Transportmittel angeordnet ist, das vom Sender ausgesendete Signal eine das Nutzerendgerät oder den Nutzer eindeutig identifizierende Kennung umfaßt und die Auswertung in einer separaten Auswertungseinheit unter zusätzlicher Berücksichtigung der Kennung erfolgt.

9. Verfahren nach Anspruch 8, bei dem der Empfänger innerhalb des Transportmittels und ein Vergleichsempfänger außerhalb am Transportmittel angeordnet ist.

10. Verfahren nach einem der vorhergehenden Ansprüche, bei dem der Sender Signale in regelmäßigen Zeitabständen aussendet.

## Claims

1. Method for the automatic detection of the use of a chargeable transport means (10, 16) for conveying people, in which
- at least one transmitter sends out signals,
- a receiver receives signals sent out by the transmitter,
- position and/or movement information of the transport means is determined and
- a detection of the use of the transport means takes place on the basis of an evaluation of position and/or movement information,
**characterised in that** the detection of the use of the transport means further takes place on the basis of an evaluation of an intensity change of successive signals received by the receiver.

2. Method according to Claim 1, in which the transmitter is arranged in the transport means, the receiver is integrated into a user terminal and the evaluation takes place in the user terminal.

3. Method according to Claim 2, in which a receiving and checking apparatus is arranged in the region of the transport means (10; 16), which receives the signals sent out by the transmitter and checks the functioning of the transmitter on the basis of the received signals.

4. Method according to Claim 3, in which the transmitter automatically changes the frequency on which it transmits in the event of impaired functioning.

5. Method according to any one of Claims 2 to 4, in which the transmitter is arranged within the transport means (10; 16) and a reference transmitter (18) is arranged outside on the transport means (10; 16), wherein the reference transmitter sends out reference signals.

6. Method according to Claim 5, in which the transmitter and the reference transmitter (18) transmit signals of the same intensity or signals with a predetermined intensity difference.

7. Method according to any one of Claims 2 to 6, in which, if the receiver receives signals from a plurality of transmitters and/or reference transmitters (18) which are arranged in the region of various transport means (10; 16), the user terminal reduces the number of signals received using exclusion criteria in such a manner that at most one signal and/or a reference signal remains.

8. Method according to Claim 1, in which the transmitter is integrated into a user terminal, the receiver is arranged in the transport means, the signal sent out by the transmitter comprises an identifier identifying the user terminal or the user uniquely and the evaluation takes place in a separate evaluation unit with additional consideration of the identifier.

9. Method according to Claim 8, in which the receiver is arranged within the transport means and a reference receiver is arranged outside on the transport means.

10. Method according to any one of the preceding claims, in which the transmitter sends out signals at regular time intervals.

## Revendications

1. Procédé de détection automatique de l'utilisation de véhicules payants (10 ; 16) et de facturation du prix du voyage pour le transport de passagers, dans lequel :
- au moins un émetteur émet des signaux,
- un récepteur reçoit les signaux émis par l'émetteur,
- des informations de positon et/ou mouvement du véhicule sont déterminés, et
- une détection de l'utilisation du véhicule a lieu sur la base d'une évaluation des informations de position et/ou mouvement,
**caractérisé en ce que** la détection de l'utilisation du véhicule de transport influence une évaluation de signaux de variation d'intensité successifs reçus par le récepteur.

2. Procédé selon la revendication 1, dans lequel l'émetteur est disposé dans le véhicule, le récepteur est intégré dans un terminal d'utilisateur et l'évaluation a lieu dans le terminal d'utilisateur.

3. Procédé selon la revendication 2, dans lequel un dispositif de réception et vérification est disposé au niveau du véhicule (10 ; 16), lequel reçoit les signaux émis par l'émetteur et vérifie le fonctionnement de l'émetteur sur la base des signaux reçus.

4. Procédé selon la revendication 3, dans lequel l'émetteur change automatiquement la fréquence à laquelle il émet, en cas de perturbation du fonctionnement.

5. Procédé selon une des revendications 2 à 4, dans lequel l'émetteur est disposé à l'intérieur du véhicule (10 ; 16) et un émetteur comparatif (18) est disposé à l'extérieur sur le véhicule (10 ; 16), moyennant quoi l'émetteur comparatif émet des signaux de comparaison.

6. Procédé selon la revendication 5, dans lequel l'émetteur et l'émetteur comparatif (18) émettent des signaux de même intensité ou des signaux avec une différence d'intensité prédéterminée.

7. Procédé selon une des revendications des revendications 2 à 6, dans lequel le terminal d'utilisateur, quand le récepteur reçoit des signaux provenant de plusieurs émetteurs et/ou émetteurs comparatifs (18), qui sont disposés au niveau de véhicules (10 ; 16) différents, réduit le nombre des signaux reçus en utilisant des critères d'exclusion de telle sorte que au maximum un signal et/ou un signal de comparaison subsiste.

8. Procédé selon la revendication 1, dans lequel l'émetteur est intégré dans un terminal d'utilisateur, le récepteur est disposé dans le véhicule, le signal émis par l'émetteur comprend une identification identifiant le terminal d'utilisateur ou l'utilisateur de manière univoque et l'évaluation a lieu dans une unité d'évaluation séparée en tenant compte en outre de l'identification.

9. Procédé selon la revendication 8, dans lequel le récepteur est disposé à l'intérieur du véhicule et un récepteur comparatif est disposé à l'extérieur sur le véhicule.

10. Procédé selon une des revendications précédentes, dans lequel l'émetteur émet des signaux à intervalles temporels réguliers.
